Europäisches Patentamt

European Patent Office

Office européen des brevets

(19)

(11) Publication number: **0 123 695**
**A1**

# EUROPEAN PATENT APPLICATION

published in accordance with Art. 158(3) EPC

(21) Application number: 83903223.2

(22) Date of filing: 14.10.83

Data of the international application taken as a basis:

(86) International application number:
**PCT/JP 83/00360**

(87) International publication number:
**WO 84/01545 (26.04.84 84/11)**

(51) Int. Cl.³: **B 60 C 17/04**

(30) Priority: 19.10.82 JP 183892/82
11.01.83 JP 23/84

(43) Date of publication of application: 07.11.84
Bulletin 84/45

(84) Designated Contracting States: CH DE FR GB LI NL SE

(71) Applicant: JAPAN CLINIC COMPANY LIMITED,
10 Kainichi-cho Uzumasa Ukyo-ku, Kyoto-shi
Kyoto 616 (JP)

(72) Inventor: IWAMI, Teruhiko, Kamigamoso
No. 81 72-1 Minami-Ojicho Kamigamo, Kita-ku Kyoto-shi
Kyoto 603 (JP)

(74) Representative: Seaborn, George Stephen, c/o Edward
Evans & Co. Chancery House 53-64 Chancery Lane,
London WC2A 1SD (GB)

(54) **WHEEL FOR VEHICLE.**

(57) A vehicle wheel which is equipped with a tire enables the vehicle to remain balanced even when the internal pressure of the tire drops due to a puncture or other accident, thereby allowing the vehicle to continue running. An annular barrel (1) equipped on both sides thereof with rims (2) for securing the bead portions of a tire is provided around its outer peripheral central part with an annular projection (4) of a diameter large enough to project beyond the outer ends of the rims (2). The annular projection (4) is further provided with at least one groove (5) crossing the projection (4). The groove (5) can be employed for facilitating the mounting of the tire onto the wheel.

S P E C I F I C A T I O N

## WHEEL FOR VEHICLES

TITLE MODIFIED
see front page

### Technical Field

This invention relates to improvements in a wheel for vehicles having a tire attached thereto when used.

### Background

The wheels of conventional vehicles such as automobiles and autobicycles are in the form of an annulus of substantially U-shaped cross-section recessed in the middle. Thus, if the tire attached in position is pierced with a hole, the compressed air in the tire gushes out and the tire deforms, often making it impossible for the car to travel. If the wheel is left to rotate with its tire punctured, the weight of the vehicle bears down on the projecting rims on the opposite sides of the wheel, causing said rims to act as cutters to cut the tire. Damage to a tire of a car running at high speed is very dangerous, putting the vehicle out of balance and often turning it over.

0123695

The object of this invention is to eliminate such
drawbacks and to provide a wheel capable of allowing the
vehicle, even if the tire is damaged during running, to maintain
its balance to continue traveling.

### Disclosure of the Invention

The wheel according to the invention comprises an
annular barrel portion with rims at the opposite sides.  An
annular projection having a diameter greater than that of
flanges at the front ends of the rims is formed arround the
outer peripheral central portion of the annular barrel portion,
and at least one groove is formed in the annular projection
to cut across the projection.

The shape of the annular projection differs with
the type and size of the vehicle and the width of the wheel
and is not limited to inverted U-shape, T-shape, etc., but
it is preferable that the portion projecting beyond the flanges
on the front ends of the rims have a substantially curved surface.

The annular projection and the annular barrel may be
formed as a unit or separate parts.  However it is preferred that at least the front end of the annular projection is formed of a plastic or rubber molding. Further, the annular projection may be formed into a hollow shape and attached to the annular barrel. In the case where the annular projection is hollow, one or more air holes may be formed in the annular projection so that air is introduced into the annular projection when compressed air is introduced into the tire. In this case, the air holes may be designed on the principle of the flute so that a sound is produced as the compressed air slowly flows out, thus notifying the driver of the air flowing out in the earlier stages of the leakage.

The shape and size of the groove formed in the annular projection differ with the shape etc. of the projection and is not particularly limited, but it is preferable that the groove cuts obliquely across the projection and that the upper portion is narrower and the lower portion is wider.

The depth of the groove should naturally extend down to the level of the flanges or therebelow, but it is preferable that the higher the annular projection, the deeper the groove and particularly that the depth be at least about twice the height of the portion of the annular projection projecting beyond the flanges.

-3-

Such wheel according to the invention has on the annular barrel the projection projecting beyond the flanges at the front ends of the rims adapted to have a tire mounted thereon. However, the tire can be easily mounted on the wheel through the groove formed across the projection. Further, once the the tire is mounted on the wheel, even if the tire is pierced with a hole and the air between the tire and the wheel gushes out, the tire is not removed from the wheel with the projection. Thus in the case where the tire is damaged, the inner side of the tread of the tire is held on the surface of the projection, so that there is no possibility of the tire being cut by the rims of the wheel or the vehicle becoming extremely unbalanced. The vehicle can be continuously travelled at low speed until it is parked in a safe place. Thus in the wheel according to the invention, the projection acts as a quasi-tire, thereby lessening the shock due to the damage to the tire.

## Brief Description of the Drawings

Fig. 1 is a side view of a wheel according to the invention.

Fig. 2 is a sectional view of the wheel of Fig. 1 with a tire attached thereto.

Fig. 3 is an explanatory view showing the shape of a groove of the wheel of Fig. 1.

Fig. 4 is a side view of an another wheel according to the invention.

Fig. 5 is a sectional view of the wheel of Fig. 4 with a tire attached thereto.

Fig. 6 is an explanatory view showing the shape of a groove of the wheel of Fig. 4.

Fig. 7 is a sectional view showing different examples of annular projections in the invention.

Fig. 8 is a sectional view of an another wheel according to the invention.

## Best Mode of Carrying Out the Invention

The embodiments of the invention will be described according to the drawings.

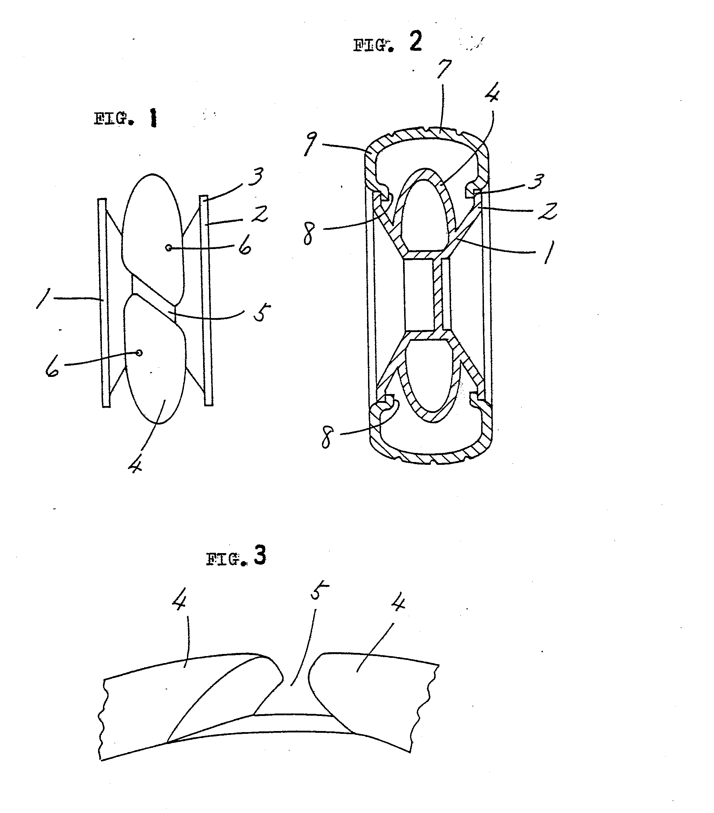

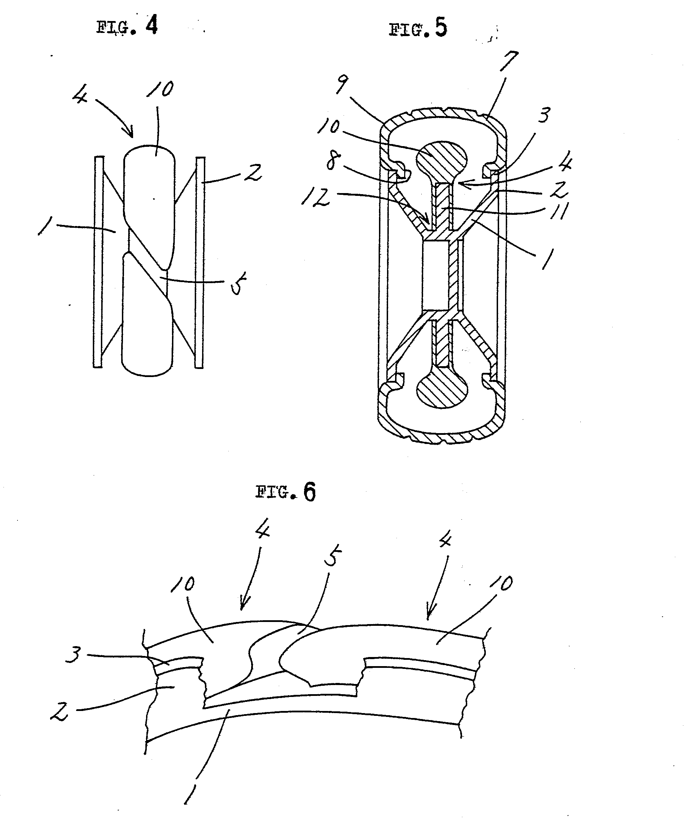

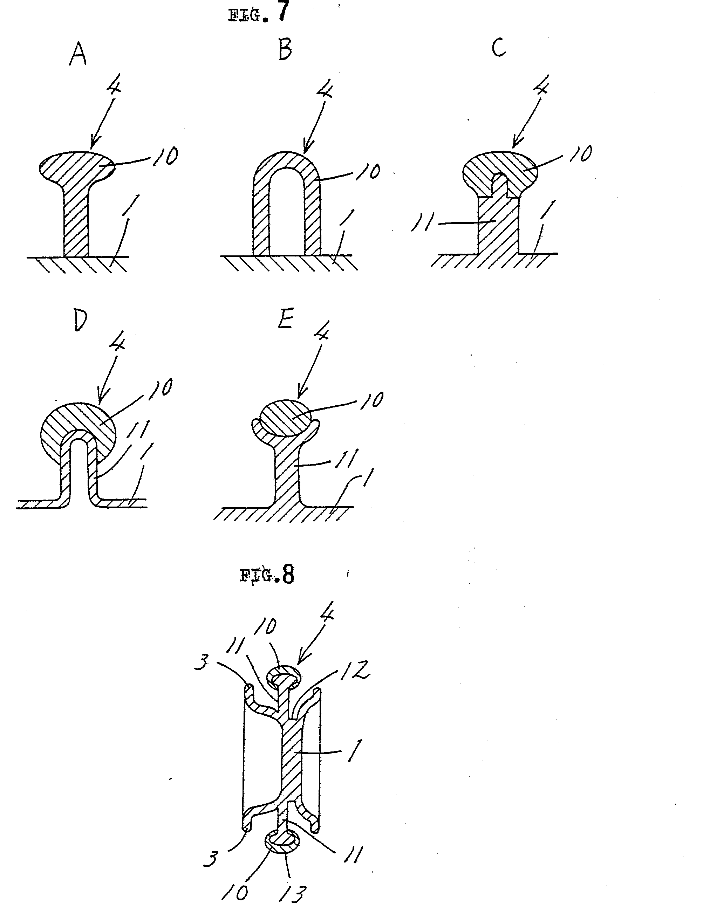

The wheel shown in Fig. 1 comprises a metal annular barrel portion (1) with rims (2) at the opposite sides, on the central portion of which a metal annular projection (4) is attached. The annular projection (4) has air holes (6) and a groove (5) obliquely across the annular projection (4). The groove (5) is narrower in the upper portion and wider in the lower portion as shown in Fig. 3.

The wheel is used in the state of mounting a tire (7) on the flanges (3) of rims (2) as shown in Fig. 2. In spite of that the diameter of the beads (8) of the tire (7) is smaller than that of the annular projection (4), the tire (7) is easily and stably mounted on the wheel. That is, the tire (7) can be mounted by thrusting the bead portion (8) and side portion (9) of the tire (7) into the barrel portion (1) from one rim (2) through the groove (5) to the other rim (2) across the projection (4).

-6-

In the embodiment as shown in Fig. 4 to Fig. 6, a plastic or rubber molding (10) is attached to the front end of the projection (4).

The plastic or rubber molding (10) may be made of natural rubber, any of the various synthetic rubbers or synthetic resins, e.g., NBR, SBR, polystyrene, polyurethane, or polypropylene, or a combination thereof, and the molding (10) may be molded in advance (division molded in two or more parts depending upon the shape) and then attached to the annular barrel (1) or to a base (11) for the annular projection (4) or it may be directly molded on the annular barrel (1) or the base (11) for the annular projection (4). In the former case, the attachment of the molding (10) itself may be made by making use of such attaching means as bolts or adhesive agents.

The plastic or rubber molding (10) is intended to lessen a shock which occurs when the tire is damaged, and since it has a suitable degree of elasticity, it effectively prevents displacement of the tire (7) when punctured, thus greately increasing the distance the car travels with the tire (7) punctured. Further, the presence of the plastic or rubber molding (10) makes it possible to make the height of the

-7-

projection (4) greater than when the annular projection (4)
is made entirely of metal. This makes it possible to detect
abnormalities of the tire (7) earlier and allows the car to
travel with the diameter of the tire (7) not greatly differing
from that of the other tires (7).

The plastic or rubber molding (10) may be such that
it forms the whole of the annular projection (4), as shown
in Fig. 7A and B or it may be formed on the base (11) for the
annular projection (4), as shown in Fig. 7C, D and E. In the
latter case, the base (11) may be integral with the annular
barrel (1) or separate therefrom, but it is preferable that
it is integral therewith. Further, it is preferable that the
plastic or rubber molding (10) be a cellular molding or foam,
from the standpoint of weight and cushioning.

Finally, in the invention, it is preferable that
the valley (12) of the annular barrel (1) be deeper than in the
case of ordinary wheels, and it is necessary for efficient
mounting of the tire (7) that the distance from the valley (12)
to the opposite top (13) of the annular projection (4) be less
than the diameter of the flanges (3) of the rims (2). However,
the depth of the valley (12) may be different on the opposite
sides of the annular projection (4), as shown in Fig. 8, and
in this case, at least one side should be of the desired depth.

-8-

## Industrial Applicability

Such wheel of the invention is useful for trucks, automobiles, autobicycles, bicycles, airplanes and other vehicles having tires attached thereto.

What is claimed is:

1. A wheel for vehicles which comprises an annular barrel portion (1) with rims (2) at the opposite sides, characterized in that an annular projection (4) is formed arround the outer peripheral central portion of the annular barrel portion (1), said projection (4) having a diameter greater than that of flanges (3) at the front ends of the rims (2), and that at least one groove (5) is formed in the annular projection (4) to cut across said projection (4).

2. A wheel as defined in Claim 1, wherein said annular projection (4) and said annular barrel (1) are formed as a unit.

3. A wheel as defined in Claim 1, wherein said annular projection (4) is formed into a hollow shape.

4. A wheel as defined in Claim 3, wherein at least one air hole is formed in said annular projection (4).

5. A wheel as defined in anyone of Claims 1 to 4, wherein said groove is formed obliquely across said annular projection (4).

-10-

0123695

6.  A wheel as defined in Claim 5, wherein said groove (5) is narrower in the upper portion and wider in the lower portion.

7.  A wheel as defined in anyone of Claims 1 to 6, wherein at least the front end of said annular projection (4) is formed of a plastic or rubber molding (10).

8.  A wheel as defined in Claim 7, wherein said annular barrel portion (1) and a base (11) for said annular projection (4) are formed as a unit and the plastic or rubber molding (10) is attached to the surface of the base (11).

9.  A wheel as defined in Claim 7, wherein the whole of said annular projection (4) is formed of the plastic or rubber molding (10).

10.  A wheel as defined in anyone of Claims 7 to 9, wherein said plastic or rubber molding (10) is a cellular molding.

-11-

AMENDED CLAIMS

1. A wheel for vehicles which comprises an annular barrel portion (1) with rims (2) at the opposite sides, characterized in that an annular projection (4) is formed arround the outer peripheral central portion of the annular barrel portion (1), said projection (4) having a diameter greater than that of flanges (3) at the front ends of the rims (2), and that at least one groove (5) is formed in the annular projection (4) to cut across said projection (4), a depth of said groove (5) being at least twice the height of the portion of said annular projection (4) projecting beyond said flanges (3).

2. A wheel as defined in Claim 1, wherein said annular projection (4) and said annular barrel (1) are formed as a unit.

3. A wheel as defined in Claim 1, wherein said annular projection (4) is formed into a hollow shape.

4. A wheel as defined in Claim 3, wherein at least one air hole is formed in said annular projection (4).

5. A wheel as defined in Claim 1, wherein said groove is formed obliquely across said annular projection (4).

6. A wheel as defined in Claim 5, wherein said groove (5) is narrower in the upper portion and wider in the lower portion.

7. A wheel as defined in Claim 1, wherein at least the front end of said annular projection (4) is formed of a plastic or rubber molding (10).

8. A wheel as defined in Claim 7, wherein said annular barrel portion (1) and a base (11) for said annular projection (4) are formed as a unit and the plastic or rubber molding (10) is attached to the surface of the base (11).

9. A wheel as defined in Claim 7, wherein the whole of said annular projection (4) is formed of the plastic or rubber molding (10).

10. A wheel as defined in Claim 7, wherein said plastic or rubber molding (10) is a cellular molding.

11. A wheel as defined in Claim 1, wherein at least one of valleys (12) formed at both sides of said annular projection (4) on said annular barrel portion (1) has such a depth as a distance from the valley (12) to the opposite top (13) of said annular projection (4) is less than the diameter of the flanges (3) of the rims (2).

FIG. 2

FIG. 1

FIG. 3

FIG. 4

FIG. 5

FIG. 6

0123695

**FIG. 7**

A  B  C

D  E

**FIG.8**

# INTERNATIONAL SEARCH REPORT

International Application No. PCT/JP83/00360

## I. CLASSIFICATION OF SUBJECT MATTER (if several classification symbols apply, indicate all) [3]

According to International Patent Classification (IPC) or to both National Classification and IPC

Int. Cl.[3] B60C 17/04

## II. FIELDS SEARCHED

Minimum Documentation Searched [4]

| Classification System | Classification Symbols |
|---|---|
| I P C | B60C 17/00 |

Documentation Searched other than Minimum Documentation
to the Extent that such Documents are included in the Fields Searched [5]

## III. DOCUMENTS CONSIDERED TO BE RELEVANT [14]

| Category* | Citation of Document, [16] with indication, where appropriate, of the relevant passages [17] | Relevant to Claim No. [18] |
|---|---|---|
| X,Y | US,A, 3212548 (George E. DraZin), 19. October. 1965 (19. 10. 65) | 1 - 10 |
| Y | US,A, 2137910 (Waino E. Hautala), 22. November. 1938 (22. 11. 38), Column 2, lines 24 to 40 | 2, 3 |
| Y | GB,A, 1483044 (Alice Louisa Mole), 17. August. 1977 (17. 08. 77) | 4, 7 |
| Y | GB,A, 2040837 (W.R. Grace & Co.), 3. September. 1980 (03. 09. 80), Page 5, lines 19 to 23, Fig. 14 | 8 |
| Y | GB,A, 1217353 (E. I. Du Pont De Nemours And Company), 31. December. 1970 (31. 12. 70) | 9, 10 |

* Special categories of cited documents: [15]
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step
"Y" document of particular relevance; the claimed invention cannot be considered to involve an inventive step when the document is combined with one or more other such documents, such combination being obvious to a person skilled in the art
"&" document member of the same patent family

## IV. CERTIFICATION

| Date of the Actual Completion of the International Search [2] | Date of Mailing of this International Search Report [2] |
|---|---|
| January 6, 1984 (06. 01. 84) | January 17, 1984 (17. 01. 84) |

| International Searching Authority [1] | Signature of Authorized Officer [20] |
|---|---|
| Japanese Patent Office | |

Form PCT/ISA/210 (second sheet) (October 1981)